# FASCICULE DE BREVET EUROPEEN

(11) **EP 2 875 065 B1**
(45) Date de publication et mention de la délivrance du brevet: **04.08.2021**
(21) Numéro de dépôt: 13739651.1
(22) Date de dépôt: 16.07.2013
(51) Int. Cl.: C08H 7/00, C08L 23/16, C08L 97/00

(54) **UTILISATION D'UNE LIGNINE POUR LE RENFORT MECANIQUE D'ELASTOMERE, ET ELASTOMERE AINSI RENFORCE**
VERWENDUNG EINES LIGNINS ZUR MECHANISCHEN VERSTÄRKUNG EINES ELASTOMERS UND AUF DIESE WEISE VERSTÄRKTES ELASTOMER
USE OF A LIGNIN FOR THE MECHANICAL REINFORCEMENT OF AN ELASTOMER, AND ELASTOMER THUS REINFORCED

(30) Priorité: 17.07.2012 FR 1256889
(43) Date de publication de la demande: 27.05.2015
(73) Titulaire: Compagnie Industrielle de la Matière Végétale, 92200 Neuilly sur Seine (FR)
(72) Inventeur: BENJELLOUN MLAYAH, Bouchra, F-31450 Pompertuzat (FR); DELMAS, Michel, F-31320 Auzeville-Tolosane (FR)
(74) Mandataire: Gevers & Orès
(86) Numéro de dépôt international: PCT/EP2013/064992
(87) Numéro de publication internationale: WO 2014/012924

(56) Documents cités:
- US-A- 3 223 697
- US-A- 3 699 091
- US-A- 3 984 362
- C.H. GILES AND S.N. NAKHWA: "Studies in adsorption. XVI. The measurement of specific surface areas of finely divided solids by solution asdorption", JOURNAL OF APPLIED CHEMISTRY, juin 1962 (1962-06), pages 266-273, XP002696653, Glasgow
- None

## Description

### DOMAINE TECHNIQUE DE L'INVENTION

La présente invention concerne une utilisation nouvelle d'un biopolymère pur et non dégradé de type polyphénol naturel représenté par une lignine particulière - ci-après lignine - pour le renfort mécanique dans des structures polymériques de type élastomères.

La présente invention concerne aussi un élastomère préparé par mise en œuvre de l'utilisation conforme à l'invention.

L'utilisation nouvelle selon la présente invention réside dans la mise en œuvre d'une lignine particulière issue d'une matière première végétale, notamment de la paille de blé, et qui est composée d'oligomères linéaires à bas poids moléculaire se comportant comme les oligomères et polymères phénoliques homologues.

L'utilisation nouvelle de la présente invention a été rendue possible parce que la lignine pure et non dégradée (appelée ci-après "Biolignine™" ou encore "Lignine CIMV") est préparée par un procédé - ci-après le "Procédé CIMV" - parfaitement maîtrisé et décrit en particulier dans le document brevet EP-B1-1.180.171.

La notion de pureté et le caractère natif de la "Biolignine™" peuvent notamment être résumés par les points suivants : taux de polysaccharides résiduels, taux de matière minérale, masse moléculaire moyenne et distribution, taux de fonctions réactives (en particulier hydroxyles), toutes ces caractéristiques étant obtenues sans traitement particulier.

Des travaux de caractérisation conduits, notamment par Michel Delmas et Bouchra Mlayah Benjelloun, ont de plus permis d'établir la structure et la fonctionnalité de la Lignine CIMV ainsi préparée dont les résultats des travaux ont été publiés dans les documents suivants :
A "Functionality of wheat Straw Lignin Extracted in Organic Acid Media Journal of Applied Polymer Science" in Vol.121 491-501(2011) ;
B "Structural elucidation of the wheat straw lignin polymer ..." in JOURNAL OF THE MASS SPECTROMETRY 2003; 38: 900-903 ;
C "Elucidation of the complex molecular structure of wheat straw lignin polymer ..." in RAPID COMMUNICATIONS IN MASS SPECTROMETRY 2007; 21: 2867-2888.

En particulier une certaine fonctionnalité et/ou des propriétés physico-chimiques spécifiques de cette Biolignine™ ou Lignine CIMV mises en évidence au cours de ces études ont confirmé le potentiel de cette lignine dans des applications commerciales dans la fabrication de polymères non toxiques, notamment dans le domaine des colles pour panneaux de particules, stratifiés, contre-plaqués et/ou en plasturgie verte, en particulier des résines phénoliques, des résines époxy.

De manière plus surprenante, les propriétés physico-chimiques spécifiques de cette lignine ont confirmé le potentiel de cette lignine comme excellent substituant du noir de carbone pour le renfort mécanique dans des structures polymériques de type élastomères.

C'est cette dernière découverte qui est à la base de la présente invention.

### ETAT DE LA TECHNIQUE

L'utilisation d'une lignine en remplacement du noir de carbone comme élément de renfort dans la production de composés de type élastomères est connue du document « Lignin for Reinforcing Rubber » (J.J. KLEIN AND ARTHUR POLLACK - West Virginia Pulp and Paper Company, Charleston - publié il ya plus de 60 ans dans "INDUSTRIAL AND ENGINEERING CHEMISTRY Vol.39, No.4.

Outre le fait que la structure de la lignine décrite dans ce document n'est pas définie, ses propriétés physico-chimiques, par exemple en termes de surface spécifique, et sa fonctionnalité sont fondamentalement différentes de celles de la lignine préparée et non dégradée conforme à l'utilisation selon l'invention.

Des documents brevets plus récents, par exemple EP-A1-2.223.928, concernent l'utilisation d'une lignine dite « fonctionnalisée », qui font tous référence à de la lignine modifiée chimiquement dans des compositions à base de caoutchouc.

Dans le document US-A-3.223.697, pour l'utilisation comme élément de renfort dans une composition d'un caoutchouc (colonne 2, ligne 31 et suivantes), il est fait référence à des lignines obtenues par co-précipitation, c'est-à-dire des lignines modifiées chimiquement. De plus, il est indiqué que les résultats obtenus après réduction en poudre n'étaient pas satisfaisants. Ainsi, malgré les efforts pour augmenter la surface spécifique et diminuer la taille des particules, le remplacement du noir de carbone par de la lignine n'était pas satisfaisant.

Ensuite (colonne 3, ligne 5 et suivantes), ce document indique une tentative de diminuer le diamètre des particules pour obtenir une surface spécifique comprise entre 3 et 5 m²/g. D'une part, cette modification n'a pas été satisfaisante du point de vue des résultats obtenus et, d'autre part, elle se situe toujours dans des tentatives d'utilisation de lignines modifiées chimiquement. Ensuite, s'agissant de l'invention objet de ce document, à partir de la colonne 3, ligne 17 et suivantes, il est fait état d'un procédé de chauffage et de modification chimique de la lignine en vue d'obtenir de la lignine en poudre ayant une surface spécifique d'au moins 20 m²/g.

Le document US-A-3.984.362 est relatif à de la lignine modifiée chimiquement et notamment aux exemples 1 et 2 (Voir notamment les des produits ajoutés pour la préparation de lignine en poudre). Dans ce document, il est revendiqué d'abord une préparation de la lignine, par lavage et re-précipitation à pH acide avant son utilisation en mélange avec le caoutchouc, c'est à dire une préparation avant utilisation.

La lignine conforme à l'utilisation selon l'invention s'en distingue en ce qu'elle n'est pas modifiée chimiquement et en ce que ses groupements fonctionnels sont « disponibles ».

### DESCRIPTION DETAILLEE DE LA PRESENTE INVENTION

La présente invention a pour objet une utilisation, pour le renfort mécanique de polymères de type élastomères, d'une lignine non modifiée chimiquement aux groupements fonctionnels disponibles qui présente une surface spécifique comprise entre 0,5 m2/g et 5 m2/g, et de préférence comprise entre 1 m2/g et 2,5 m2/g.

Selon d'autres caractéristiques de l'invention :
- ladite lignine a une masse moléculaire faible et dont la Mw est comprise entre 700 g/mol et 2000 g/mol ;
- ladite lignine a un indice de polydispersité égal à environ 1,3 ;
- ladite lignine comporte des groupements fonctionnels disponibles choisis dans le groupe constitué par les hydroxyles aliphatiques, les hydroxyles phénoliques et les acides carboxyliques ;
- les hydroxyles aliphatiques sont présents à raison de 1,5 mmol/g à 3,0 mmol/g, de préférence à raison de 2,3 mmol/g ;
- les hydroxyles phénoliques sont présents à raison de 1,1 mmol/g à 2,0 mmol/g, de manière préférée à raison d'une teneur non inférieure de 1,1 mmol/g ;
- les acides carboxyliques sont présents à raison de 0,5 mmol/g à 1,5 mmol/g, de manière préférée à raison d'une teneur égale à environ 1,0 mmol/g ;
- ladite lignine présente un diamètre moyen de particules pondéré compris entre 5 microns et 100 microns, et de préférence compris entre 10 microns et 15 microns. L'invention a aussi pour objet un élastomère.

L'invention propose aussi un élastomère incorporant une lignine mise en œuvre dans une utilisation selon les enseignements de l'invention.

Selon une autre caractéristique, l'élastomère ne comporte pas de noir de carbone.

### BREVE DESCRIPTION DES FIGURES

La présente invention va maintenant être décrite à l'aide d'exemples de réalisation et de tableaux de résultats donnés à titre purement illustratif et non limitatif, et en référence aux dessins annexés dans lesquels :
- la figure 1 est un graphique illustrant la répartition/distribution granulomètrique des particules d'une Biolignine™ "standard" 500 microns ;
- la figure 2 est un graphique illustrant la répartition/distribution granulomètrique des particules d'une Biolignine™ finement broyée 15 microns ;
- les figures 3 à 6 sont des vues microscopiques par Microscopie Electronique à Balayage de différents mélanges selon l'invention et/ou produits de référence.

### DESCRIPTION DETAILLEE DE L'INVENTION

Une poudre de lignine a été préparée comme suit à partir d'une Biolignine™ obtenue selon le Procédé CIMV :

A partir d'une Biolignine™ de paille de blé, on a réalisé un broyage « fin » au moyen d'un broyeur à billes et planétaire, qui présente les caractéristiques suivantes :
- Matière sèche : 95%
- Surface spécifique : 1.56m2/g
- Distribution granulomètrique : 50% des particules ont un diamètre moyen de particules pondéré inférieur à 15 microns et 90% des particules ont un diamètre moyen de particules pondéré inférieur 100 microns.

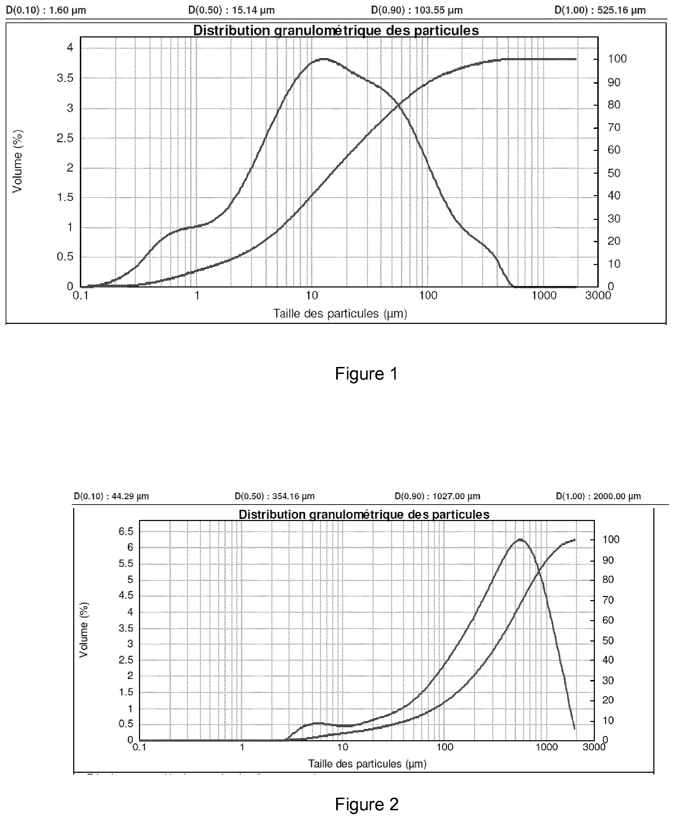

La distribution granulomètrique des particules est illustrée à la figure 1 des dessins annexés à la présente description.

On a aussi représenté à la figure 2 la distribution granulomètrique des particules d'une Biolignine™ "standard" qui présente les caractéristiques suivantes :
- Matière sèche : 95%
- Surface spécifique : 0.077m2/g
- Distribution granulomètrique : 40% des particules ont un diamètre moyen de particules pondéré compris entre 350 microns et 1000 microns et 90% des particules ont un diamètre moyen de particules pondéré compris entre 45 microns et 1000 microns.

Des essais de dispersion de la Biolignine™ dans un élastomère, et plus particulièrement dans un EPDM (Ethylène-Propylène-Diène Monomère) qui est utilisé dans tous les domaines de l'industrie des caoutchoucs, ont été réalisés.

La poudre de lignine a été incorporée directement dans un caoutchouc par un système de mélangeur à rouleaux.

Les résultats de ces essais ont été comparés avec un mélange de référence composé de noir de carbone et d'EPDM.

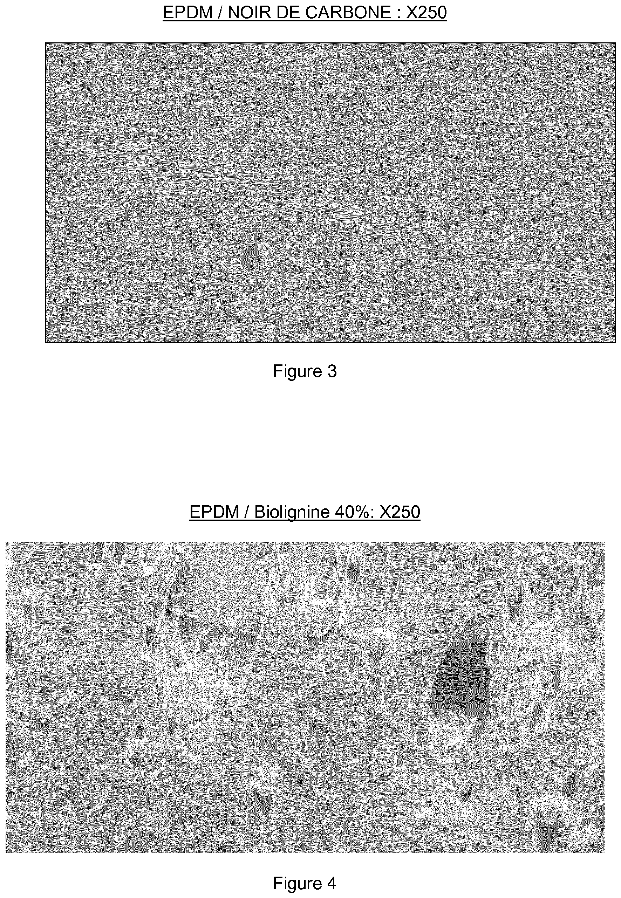

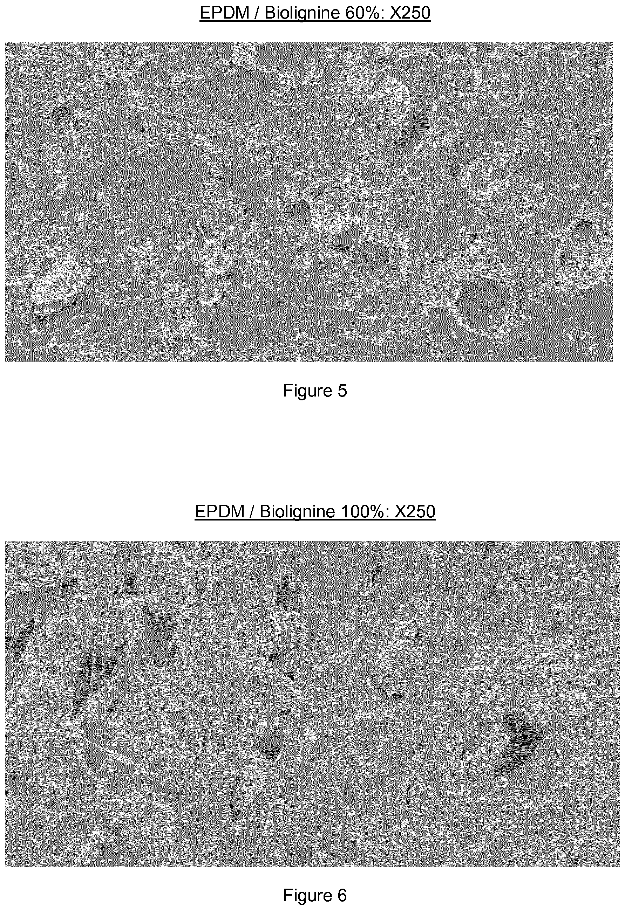

L'état microscopique de ces mélanges par dispersion a été évalué par Microscopie Electronique à Balayage (MEB) et les résultats sont illustrés aux figures 3 à 6 qui sont des vues microscopiques, avec un grossissement de 250 fois.

On constate que, quel que soit le taux d'incorporation de la Biolignine™ dans l'EPDM, une hétérogénéité du mélange est observée dans tous les cas.

Des essais comparatifs ont été effectués avec trois échantillons de mélanges EPDM/Biolignine™ et un échantillon de référence EPDM/Noir de Carbone dont les résultats sont les suivants.

**Tableau 1**

| Biolignine™ "standard" 500 microns. | | | | |
|---|---|---|---|---|
| Biolignine™ 500 microns | | | | |
| Proportion massique EPDM | 100 | 100 | 100 | 100 |
| Proportion massique Biolignine | | 35 | 72 | 105 |
| Proportion massique noir de carbone | 100 | 0 | 0 | 0 |
| Densité gr/cm³ | 1,18 | | 1,06 | 1,15 |
| Dureté shA | 69 | 55 | 68 | HS |
| Allongement à la rupture Ar mm | 270 | 240 | 165 | 100 |
| drc (22h 70°)% | 40 | | | |

**Tableau 2**

| Biolignine™ finement broyée 15 microns, surface spécifique 1.56 m2/g | | | | |
|---|---|---|---|---|
| Biolignine™ 15 microns | | | | |
| Proportion massique EPDM | 100 | 100 | 100 | 100 |
| Proportion massique Biolignine | 0 | 35 | 72 | 35 |
| Proportion massique noir de carbone | 100 | 0 | 0 | 0 |
| Densité gr/cm³ | 1,18 | | | |
| Dureté shA | 69 | 61 | 62 | 67 |
| Résistance à la rupture DaN | 10 à 15 | 6,6 | 13,2 | 27,2 |
| Allongement à la rupture Ar mm | 170 à 270 | 139 | 342 | 270 |

Malgré l'hétérogénéité des mélanges Biolignine™/EPDM, ces résultats montrent que la Biolignine™ peut remplacer le noir de carbone dans des mélanges à base d'EPDM, avec des caractéristiques de dureté et d'allongement satisfaisants.

L'augmentation de la surface spécifique procure une amélioration de la dureté et de la résistance à la rupture.

L'augmentation du taux d'incorporation procure une amélioration des différentes caractéristiques.

Les résultats concernant le mélange Biolignine™ / Noir de Carbone en proportions égales fournit des résultats au mélange de référence sans Biolignine™.

Dans le cadre de la présente description, la surface spécifique a été mesurée selon la méthode dite par "diffraction laser" confirmée par adsorption d'azote (Méthode dite "BET").

Voir par exemple : http://www.malvern.com/LabEng/technology/laser_diffraction/gas_ adsorption_bet.htm

La masse moléculaire a été déterminée selon la méthode dite SEC ("Size Exclusion Chromatography") Eluant THF, Détection "Réfractomètre", trois colonnes en série 100, 500, 1000 Angströms, en SDVB (Styrène Divinyl Benzène) à 30°C. Cette méthode conventionnelle a été décrite dans toutes les publications "Biolignine™" ou encore "Lignine CIMV".

Voir encore par exemple :
http://www.malvern.com/labeng/technology/size-exclusion-chromatography.htm , ou
https://en.wikipedia.org/wiki/Size-exclusion_chromatography

## Revendications

1. Utilisation, pour le renfort mécanique de polymères de type élastomères, d'une lignine non modifiée chimiquement aux groupements fonctionnels disponibles qui présente une surface spécifique comprise entre 0,5 m2/g et 5 m2/g, et de préférence comprise entre 1 m2/g et 2,5 m2/g.

2. Utilisation selon la revendication 1, **caractérisée en ce que** ladite lignine a une masse moléculaire faible et dont la Mw est comprise entre 700 g/mol et 2000 g/mol.

3. Utilisation selon la revendication 2, **caractérisée en ce que** ladite lignine a un indice de polydispersité égal à environ 1,3.

4. Utilisation selon la revendication 2, **caractérisée en ce que** ladite lignine comporte des groupements fonctionnels disponibles choisis dans le groupe constitue par les hydroxyles aliphatiques, les hydroxyles phénoliques et les acides carboxyliques.

5. Utilisation selon la revendication 4, **caractérisée** en ce
- les hydroxyles aliphatiques sont présents à raison de 1,5 mmol/g à 3,0 mmol/g, de préférence à raison de 2,3 mmol/g ;
- ou les hydroxyles phénoliques sont présents à raison de 1,1 mmol/g à 2,0 mmol/g, de manière préférée à raison d'une teneur non inférieure de 1,1 mmol/g ;
- ou les acides carboxyliques sont présents à raison de 0,5 mmol/g à 1,5 mmol/g, de manière préférée à raison d'une teneur égale à environ 1,0 mmol/g.

6. Utilisation selon la revendication 1, **caractérisée en ce que** ladite lignine présente un diamètre moyen de particules pondéré compris entre 5 microns et 100 microns, et de préférence compris entre 10 microns et 15 microns.

7. Elastomère incorporant une lignine mise en œuvre dans une utilisation selon l'une quelconque des revendications précédentes.

8. Elastomère selon la revendication 7, **caractérisé en ce qu'**il ne comporte pas de noir de carbone.

## Patentansprüche

1. Verwendung eines nicht chemisch modifizierten Lignins mit verfügbaren funktionellen Gruppen, das eine spezifische Oberfläche im Bereich zwischen 0,5 m2/g und 5 m2/g, und vorzugsweise im Bereich zwischen 1 m2/g und 2,5 m2/g aufweist, zur mechanischen Verstärkung von Polymeren vom Elastomertyp.

2. Verwendung nach Anspruch 1, **dadurch gekennzeichnet, dass** das Lignin ein niedriges Molekulargewicht aufweist und sein Mw im Bereich zwischen 700 g/mol und 2000 g/mol liegt.

3. Verwendung nach Anspruch 2, **dadurch gekennzeichnet, dass** das Lignin einen Polydispersitätsindex von etwa gleich 1,3 aufweist.

4. Verwendung nach Anspruch 2, **dadurch gekennzeichnet, dass** das Lignin verfügbare funktionelle Gruppen umfasst, die ausgewählt sind aus der Gruppe bestehend aus aliphatischen Hydroxylen, phenolischen Hydroxylen und Carbonsäuren.

5. Verwendung nach Anspruch 4, **dadurch gekennzeichnet, dass**:
- die aliphatischen Hydroxyle in einer Menge von 1,5 mmol/g bis 3,0 mmol/g, vorzugsweise einer Menge von 2,3 mmol/g vorliegen;
- oder die phenolischen Hydroxyle in einer Menge von 1,1 mmol/g bis 2,0 mmol/g, bevorzugt mit einem Gehalt von nicht weniger als 1,1 mmol/g vorliegen;
- oder die Carbonsäuren in einer Menge von 0,5 mmol/g bis 1,5 mmol/g, bevorzugt mit einem Gehalt von etwa gleich 1,0 mmol/g vorliegen.

6. Verwendung nach Anspruch 1, **dadurch gekennzeichnet, dass** das Lignin einen gewichteten mittleren Partikeldurchmesser im Bereich zwischen 5 Mikrometer und 100 Mikrometer, und vorzugsweise im Bereich zwischen 10 Mikrometer und 15 Mikrometer aufweist.

7. Elastomer, das ein Lignin beinhaltet, welches in einer Verwendung nach einem der vorstehenden Ansprüche eingesetzt wird.

8. Elastomer nach Anspruch 7, **dadurch gekennzeichnet, dass** es keinen Ruß umfasst.

## Claims

1. Use, for the mechanical reinforcement of polymers of elastomer type, of a chemically unmodified lignin with available functional groups which presents a specific surface area comprised between 0.5m²/g and 5m²/g, and preferably comprised between 1m²/g and 2.5m²/g.

2. Use according to claim 1, **characterised in that** said lignin has a low molecular mass and of which the Mw is comprised between 700g/mol and 2000g/mol.

3. Use according to claim 2, **characterised in that** said lignin has a polydispersity index equal to about 1.3.

4. Use according to claim 2, **characterised in that** said lignin comprises available functional groups chosen from the group consisting of aliphatic hydroxyls, phenolic hydroxyls and carboxylic acids.

5. Use according to claim 4, **characterised in that**:
- the aliphatic hydroxyls are present in an amount of 1.5mmol/g to 3.0mmol/g, preferably in an amount of 2.3mmol/g;
- or, the phenolic hydroxyls are present in an amount of 1.1mmol/g to 2.0mmol/g, preferably in an amount of content not less than 1.1mmol/g;
- or, carboxylic acids are present in an amount of 0.5mmol/g to 1.5mmol/g, preferably in an amount of content equal to about 1.0mmol/g.

6. Use according to claim 1, **characterised in that** said lignin presents an average weighted particle diameter comprised between 5 microns and 100 microns, and preferably comprised between 10 microns and 15 microns.

7. Elastomer incorporating a lignin implemented in a use according to any one of the preceding claims.

8. Elastomer according to claim 7, **characterised in that** it does not comprise carbon black.
